# EUROPÄISCHE PATENTANMELDUNG

(11) **EP 3 373 084 A1**
(43) Veröffentlichungstag der Anmeldung: **12.09.2018**
(21) Anmeldenummer: 17160321.0
(22) Anmeldetag: 10.03.2017
(51) Int. Cl.: G05B 19/042, G06F 21/57

(54) **VERFAHREN ZUM BETRIEB EINER STEUERVORRICHTUNG SOWIE STEUERVORRICHTUNG MIT EINEM GESCHÜTZTEN BETRIEBSMODUS**

(71) Anmelder: Siemens Aktiengesellschaft, 80333 München (DE)
(72) Erfinder: Bretschneider, Jochen, 73732 Esslingen (DE)

(57) **Zusammenfassung**

Die Erfindung betrifft ein Verfahren zum Betrieb einer Steuervorrichtung (1) sowie eine Steuervorrichtung (1), bei denen zum Verhindern von Datenmissbrauch ein geschützter Betriebsmodus aktivierbar ist, in dem eine Vielzahl an Schutzmaßnahmen durchführbar ist, wie:
- das Auslesen der Daten aus der Steuervorrichtung (1) wird verhindert,
- die Daten werden lediglich in verschlüsselter Form ausgelesen bzw. auf die externe Rechnereinheit (4) übertragen,
- die Daten werden lediglich in vorverarbeiteter Form mit reduziertem Informationsgehalt ausgelesen bzw. auf die externe Rechnereinheit (4) übertragen,
- die Anzeige der Daten auf der Anzeigeeinrichtung (3) wird verhindert,
- die Daten werden lediglich in vorverarbeiteter Form mit reduziertem Informationsgehalt auf der Anzeigeeinrichtung (3) angezeigt,
- das Aufzeichnen der Daten, die beim Steuern und/oder Regeln der Maschine (2), der Anlage oder des Prozesses anfallen, wird verhindert,
- eine Hardware- und/oder Software-Konfiguration der Maschine (2), der Anlage des Prozesses oder der Steuervorrichtung (1) wird mit einer Referenz- Hardware- und/oder Software-Konfiguration der Maschine (2), der Anlage des Prozesses oder der Steuervorrichtung (1) verglichen und in Abhängigkeit des Vergleichsergebnisses wird eine vorbestimmte Reaktion der Steuervorrichtung (1) erzeugt,
- das Ändern einer während einer Inbetriebnahme der Maschine oder Anlage festgelegten Hardware- und/oder Softwarekonfiguration wird verhindert.

## Beschreibung

Die Erfindung betrifft ein Verfahren zum Betrieb einer Steuervorrichtung zum Steuern und/oder Regeln einer Maschine, einer Anlage oder eines Prozesses unter Abarbeitung eines Steuerprogramms, wobei in der Steuervorrichtung Daten vorhanden sind und/oder während der Abarbeitung des Steuerprogrammes in der Steuervorrichtung anfallen, wobei die Steuervorrichtung wenigstens eine Schnittstelle zum Auslesen der Daten und/oder zum Übertragen der Daten an eine externe Rechnereinheit umfasst und wobei die Steuervorrichtung eine Anzeigeeinrichtung umfasst und/oder mit einer Anzeigeeinrichtung verbindbar ist zum Anzeigen der Daten. Ferner betrifft die Erfindung eine Steuervorrichtung zur Durchführung eines derartigen Verfahrens.

Der Schutz von Know-How durch Verschlüsselung von Fertigungsinformationen, wie z.B. NC-Teileprogrammen, zugehörigen Werkzeuglisten, Fertigungsinformationen zu Aufspannvorrichtungen, Rohlingen, etc., ist heute in vielen Firmen Standard. Vor allem durch den Trend der "Additiven Fertigung" ist es einfach, eine Bearbeitung unbefugt von einer Maschine auf eine andere Maschine zu kopieren, sofern man die Fertigungsinformation, wie beispielsweise das Teileprogramm zum "Drucken", verfügbar hat. Dem Schutz dieses internen Know-Hows kommt deswegen zukünftig eine besondere Bedeutung zu. Dies betrifft in besonderem Maße die "Additive Manufacturing" Industrie, aber auch die konventionelle spanabhebende Fertigung, wenn anspruchsvolle oder militärische Bauteile gefertigt werden.

Bereits heute ist die geschützte Übertragung von Fertigungsinformationen auf eine CNC-gesteuerte Werkzeugmaschine bekannt. Dabei werden die Teileprogramme bzw. die Fertigungsinformationen verschlüsselt übertragen und entweder auf der CNC-Steuerung entschlüsselt und abgearbeitet oder an einem separaten Computer nahe der CNC-gesteuerten Maschine entschlüsselt und zur Abarbeitung an die CNC-Steuerung übergeben. Während der Abarbeitung auf der CNC-Steuerung werden die Fertigungsinformationen jedoch entschlüsselt und können heute auf vielfältigste Weise an der CNC-Steuerung bzw. den Antriebssystemen mitgeschrieben werden. Es besteht die Gefahr, dass während der Abarbeitung des Teileprogramms an der Maschine oder den Antrieben steuerungsinterne Daten und zugehörige Fertigungsinformationen mitgeschrieben werden und die so gewonnenen Informationen dazu genutzt werden, das ursprünglich verschlüsselte Fertigungsprogramm zu rekonstruieren. Es wird darauf hingewiesen, dass die Begriffe "Daten" und "Informationen" im Rahmen dieser Anmeldung synonym verwendet werden.

Aufgabe der vorliegenden Erfindung ist es, unbefugtes Abgreifen von Informationen beim Betrieb einer Steuervorrichtung zum Steuern und/oder Regeln einer Maschine, einer Anlage oder eines Prozesses zu verhindern.

Diese Aufgabe wird durch ein Verfahren zum Betrieb einer Steuervorrichtung zum Steuern und/oder Regeln einer Maschine, einer Anlage oder eines Prozesses mit den Verfahrensschritten gemäß Patentanspruch 1 gelöst. Ferner wird die Aufgabe gelöst durch eine Steuervorrichtung nach Anspruch 9 zur Durchführung eines derartigen Verfahrens.

Die Erfindung geht aus von einer Steuervorrichtung, die alle technisch notwendigen Mittel aufweist, um prinzipiell in der Steuervorrichtung vorhandene bzw. bei der Steuerung bzw. Regelung der Maschine, der Anlage oder des Prozesses anfallende Daten aus der Steuervorrichtung auslesen zu können. Einerseits kann die Steuervorrichtung über wenigstens eine dafür geeignete Schnittstelle verfügen. Über die Schnittstelle können Daten beispielsweise über ein Netzwerk (auch drahtlos) aus der Steuervorrichtung ausgelesen und auf einen nicht von der Steuervorrichtung umfassten Rechner oder Datenspeicher übertragen werden. Andererseits ist es möglich, dass Daten - gegebenenfalls ebenfalls über eine geeignete Schnittstelle - zu einer mit der Steuervorrichtung verbundenen oder von der Steuervorrichtung umfassten Anzeigevorrichtung übertragen und dort angezeigt werden. Vorzugsweise verfügt die erfindungsgemäße Steuervorrichtung sowohl über eine Schnittstelle zum Übertragen von Daten an die externe Recheneinrichtung als auch über eine Anzeigeeinrichtung zur Anzeige von Daten.

Im Zusammenhang mit der Erfindung ist es möglich, dass alle in der Steuerung vorhandenen oder anfallenden Daten dem erfindungsgemäßen Schutz unterzogen werden. In der Regel stellen die gemäß der Erfindung behandelten Daten jedoch nur einen Teil dieser Gesamtheit an Daten dar. Vorteilhaft kann vom Benutzer und/oder vom Hersteller der Steuervorrichtung und/oder vom Hersteller der Maschine bzw. Anlage bestimmt werden, welche Daten aus der Gesamtheit von Daten wenigstens einer der erfindungsgemäßen Sonderbehandlungen unterzogen werden sollen. Dadurch hat es der Benutzer bzw. Hersteller selbst in der Hand, welche Daten er für besonders schützenswert hält. Selbstverständlich können derartige Einstellungen nur mit einer dafür erforderlichen Zugriffsberechtigung eingestellt bzw. geändert werden.

Die Erfindung bietet den Vorteil, dass der Benutzer darüber bestimmen kann, wieviel und welche Informationen (Daten) er aus der Steuervorrichtung bzw. der damit gesteuerten Maschine oder Anlage preisgeben will. Dadurch kann sich der Benutzer bestmöglich vor ungewolltem Know-How-Abgriff schützen.

Unter die in der Steuervorrichtung vorhandenen Daten fallen insbesondere auch die Daten, die bereits vor der Abarbeitung des Steuerprogrammes in der Steuervorrichtung vorhanden sind, beispielsweise die Steuervorrichtung selbst betreffende Daten oder Daten die allgemein die Maschine, die Anlage, den Prozess, Betriebsmittel, wie z.B. Werkzeuge, usw. betreffen. Zu den während der Abarbeitung des Steuerprogrammes in der Steuervorrichtung anfallen Daten gehören insbesondere Anweisungen und Informationen des Steuerprogrammes, Messwerte, Sensorsignale oder von der Steuervorrichtung selbst berechnete oder erzeugte Daten wie Regelungsparameter, Sollwerte für Antriebe einer Maschine, Sollpositionen, Ventilstellungen etc. etc.

In beispielhafter und unvollständiger Aufzählung werden nachfolgende Informationen am Beispiel der Fertigung mittels einer CNC-gesteuerten Werkzeugmaschine genannt:
- Fertigungsinformationen wie CAD-Zeichnungen, Text- und Bildelemente zum Bearbeitungsjob,
- Teileprogramme und Bearbeitungszyklen,
- Werkzeuglisten und -informationen,
- Technologische Informationen wie Vorschub und Spindeldrehzahl,
- Maschinendaten,
- Daten die während des Betriebs der Maschine anfallen, wie Positionswerte der Vorschub- und Rundachsen (sowie zugehörige Geschwindigkeiten, Beschleunigungen, etc.)
- CNC-interne Daten im Rahmen des Vor- und Hauptlaufes und der Interpolation (z.B. NC-Satznummer, aktive Transformationen, Nullpunktverschiebungen und aktive Frames),
- Daten die zyklisch während der Bearbeitung, also dem Betrieb der Maschine, anfallen wie Positionswerte, Geschwindigkeitswerte, Beschleunigungswerte, Stromwerte, Regelabweichungen, Schnittkräfte, Momente, Dynamikdaten.

Während sich bisherige Lösungen darauf konzentrieren, zum Schutz von Know-How Daten vor allem außerhalb der Steuervorrichtung zu schützen, beispielsweise indem ein Steuerprogramm in verschlüsselter Form auf die Steuervorrichtung übertragen wird, sieht die Erfindung vor, die Einstelldaten der Maschine sowie die im laufenden Betrieb der Maschine oder Anlage erzeugten Daten vor ungewolltem oder unberechtigtem Zugriff zu schützen, um damit eine mögliche Rekonstruktion technologischer Daten wie Fertigungsdaten (Bewegungsabläufe und Technologiedaten, Positionswerte, Geschwindigkeitswerte, Spindeldrehzahle etc.) zu verhindern.

Die Erfindung sieht vor, dass bei der Steuervorrichtung ein geschützter Betriebsmodus aktivierbar ist. Der Benutzer hat damit die Wahl, die Steuervorrichtung wie bisher, also weitgehend "ungeschützt", oder - nach der entsprechenden Aktivierung - in einem geschützten Betriebsmodus zu betreiben. Hierbei muss natürlich sichergestellt sein, dass nur legitimierte Benutzer den geschützten Betriebsmodus wieder deaktivieren können. Dafür könnte beispielsweise die Eingabe eines geheimen Schlüssels an einer der Steuervorrichtung zugeordneten Bedieneinrichtung erforderlich sein. Mittels der Erfindung kann erreicht werden, dass aus der Steuervorrichtung keinerlei maschinen- bzw. fertigungs- bzw. steuerungsrelevante Informationen mehr abgegriffen werden können, insbesondere keine solchen Daten bzw. Informationen, die während des Betriebs der Steuervorrichtung in der Steuervorrichtung anfallen bzw. von der Steuervorrichtung selbst erzeugt werden.

Eine bevorzugte Ausführungsform der Erfindung sieht vor, dass der berechtigte (legimitierte) Benutzer nicht nur den geschützten Betriebsmodus aktivieren bzw. wieder deaktivieren kann, sondern auch eine Wahlmöglichkeit hat, wodurch Informationen in dem geschützten Betriebsmodus vor unberechtigtem Zugriff geschützt werden sollen. Beispielsweise können auf einer Bedieneinrichtung der Steuervorrichtung, die eine Anzeigeeinrichtung umfasst, bestimmte Schutzmechanismen aktiviert, deaktiviert oder parametriert werden.

Bei dem erfindungsgemäßen Verfahren bzw. der erfindungsgemäßen Steuervorrichtung kann wenigstens eine der nachfolgend genannten Maßnahmen zum Schutz vor einem unberechtigten Abgriff von Informationen durchgeführt werden:
- Das Auslesen von Daten aus der Steuervorrichtung bzw. der Maschine oder Anlage wird verhindert.
   Industrielle Steuerungen verfügen heute über standardisierte, zum Teil auch offene Schnittstellen. Beispiele hierfür sind: Ethernet, Profinet, Profibus, DriveCliq, OPC-UA, MT Connect, HMI-OA, NCK-OA etc. Zunächst erhöhen diese für den Benutzer die Flexibilität beim Betrieb einer Maschine oder Anlage, da in einfacher Weise z.B. Teileprogramme zur Maschine übertragen, zusätzliche Hard- und/oder Software-Komponenten integriert oder Daten zu analytischen oder statistischen Zwecken ausgelesen werden können. Auf der anderen Seite birgt gerade diese Offenheit auch die Gefahr, dass die über die Schnittstellen zusätzlich eingebundenen Komponenten oder die ausgelesenen Daten dazu verwendet werden können, in von dem Benutzer nicht beabsichtigter Weise Know-How abzugreifen. Die Erfindung sieht daher vor, dass derartige Schnittstellen vom Anwender deaktiviert oder in ihren Übertragungseigenschaften beschränkt werden können. Ein unerwünschter Abgriff von Daten, z.B. über eine deaktivierte HMI-OA-Schnittstelle, ist somit nicht mehr möglich oder es können lediglich freigegebene Daten übertragen werden.
- Die Daten werden lediglich in verschlüsselter Form aus der Steuervorrichtung ausgelesen bzw. auf die externe Rechnereinheit übertragen.
   Diese Maßnahme hat gegenüber einer vollständigen Deaktivierung einer Schnittstelle den Vorteil, dass die Schnittstelle prinzipiell noch zur Übertragung von Daten zur Verfügung steht. Unkritische Daten können daher wie bisher übertragen werden. Einem Know-How-Verlust wird dadurch begegnet, dass bestimmte Daten lediglich in verschlüsselter Form übertragen werden und damit nur von Personen verwertbar sind, die über den entsprechenden Schlüssel verfügen.
- Die Anzeige von Daten auf einer von der Steuervorrichtung umfassten oder mit der Steuervorrichtung verbundenen Anzeigeeinrichtung wird verhindert bzw. reduziert.
   Dem Benutzer werden die benötigten Informationen auf der Anzeigeeinrichtung in einer Weise angezeigt, die nur zur Erfüllung der konkreten Aufgabe benötigt werden. Ein vollständiges Bild der Fertigungsinformation kann dabei nicht abgerufen werden. Im Beispiel einer CNC-Steuerung für eine Werkzeugmaschine kann dies beispielsweise bedeuten:
   - lediglich kontextbezogene Anzeige von aktuellen Positionswerten im MDA- oder JOG-Betrieb,
   - keine Anzeige von Programmcode des NC-Programms bis auf aktuell relevante Informationen, z.B. zu einer Unterbrechungsstelle,
   - keine Anzeige von Satznummern,
   - keine Anzeige programmierter Spindeldrehzahlen und Vorschübe,
   - keine Anzeige von Toleranzwerten (z.B. COMPCAD),
   - keine Anzeige von GCODE-Gruppen,
   - keine Anzeige der kompletten Werkzeugliste, sondern nur des aktuellen Werkzeuges.
- Das Aufzeichnen von Daten, innerhalb und/oder außerhalb der Steuervorrichtung, die beim Steuern und/oder Regeln der Maschine, der Anlage oder des Prozesses in der Steuervorrichtung anfallen bzw. von der Steuervorrichtung erzeugt werden, wird verhindert.
   Im Beispiel einer CNC-Steuerung für eine Werkzeugmaschine bedeutet dies vor allem, dass die Möglichkeit der Aufzeichnung sogenannter Traces verhindert wird. Traceaufzeichnung heißt, dass der Werteverlauf bestimmter Variablen, beispielsweise Achspositionen, über einen vorgegebenen Zeitraum während der Abarbeitung des Steuerprogrammes aufgezeichnet wird. Traces können nicht nur aus der Steuervorrichtung, sondern auch an anderer Stelle aus der Maschine bzw. Anlage, beispielsweise aus Antrieben aufgezeichnet werden. Aus diesen Traces können umfangreiche Fertigungsinformationen gewonnen werden.
   Sehr ähnlich zu der Aufzeichnung von Traces sind die bei industriellen Steuerungen bekannten LOG-Mechanismen. Beim Data-Logging werden Daten in einem bestimmten Rhythmus aufgezeichnet und in einem Speicher abgelegt.
   Das Aufzeichnen von Traces bzw. das Data-Logging wird erfindungsgemäß insbesondere dadurch verhindert, dass entsprechende Funktionen der Steuervorrichtung gesperrt bzw. deaktiviert werden.
- Das Vorverarbeiten von Daten, um deren Informationsgehalt zu reduzieren.
   Ziel dabei ist es, die aus der Steuervorrichtung, der Maschine oder Anlage gewonnenen Daten so vorzuverarbeiten und zu verändern, dass sie, wenn sie auf einen externen Rechner übertragen oder an einer Anzeigeeinrichtung visualisiert werden, nicht mehr zur Rekonstruktion von Fertigungsinformationen verwertbar sind. Die Vorverarbeitung kann beispielsweise darin bestehen, dass die Daten nur noch lückenhaft oder mit reduzierter Genauigkeit geliefert werden. Eine andere Möglichkeit besteht darin, bei zeitlich veränderlichen Daten den Bezug zu der Zeit zu entfernen.
- Das Vergleichen einer Hardware- und/oder Software-Konfiguration der Maschine, der Anlage des Prozesses oder der Steuervorrichtung mit einer Referenz- Hardware- und/oder Software-Konfiguration der Maschine, der Anlage des Prozesses oder der Steuervorrichtung und in Abhängigkeit des Vergleichsergebnisses das Erzeugen einer vorbestimmten Reaktion der Steuervorrichtung.

Ziel dieser Maßnahme ist es, zu erkennen, ob ungewollte Manipulationen an den genannten Stellen vorgenommen wurden. So wäre es beispielsweise denkbar, dass an einem von der Maschine umfassten Datenbus ein weiterer Busteilnehmer hinzugefügt wurde, der in unbeabsichtigter Weise Daten über den Datenbus ausliest und weiterleitet. Ferner wäre es möglich, dass an der Steuerungssoftware selbst Änderungen vorgenommen wurden, die ebenfalls zu einem ungewollten Zugriff auf Daten führen könnten. Durch den Vergleich der Hardware- und/oder Softwarekonfiguration mit einer entsprechenden Referenz-Konfiguration können derartige Manipulationen frühzeitig erkannt werden. Vorteilhaft wird die Referenz-Konfiguration in einem geschützten Speicherbereich der Steuervorrichtung hinterlegt, so dass diese selbst vor Manipulationen geschützt ist. Zeigt der Vergleich, dass die aktuelle Konfiguration und hinterlegte Referenz-Konfiguration übereinstimmen, so kann mit großer Sicherheit davon ausgegangen werden, dass keine unerlaubten Manipulationen vorgenommen wurden. Wird jedoch ein Unterschied zwischen den beiden Konfigurationen erkannt, so erfolgt eine vorbestimmte Reaktion mittels der Steuervorrichtung. Im einfachsten Fall könnte eine Warnmeldung angezeigt werden, die einen Benutzer auf diesen Umstand aufmerksam macht. Alternativ könnte der Betrieb der Maschine oder Anlage auch automatisch unterbunden werden. Zwischen diesen beiden Extremen ist eine Vielzahl alternativer Maßnahmen denkbar.

Änderungen an einer während einer Inbetriebnahme der Maschine oder Anlage festgelegten Hardware- und/oder Softwarekonfiguration werden verhindert.
Bei der Inbetriebnahme einer Maschine oder Anlage ist es erforderlich, in der Steuervorrichtung für eine Vielzahl von Parametern deren Werte festzulegen, die Maschine, die Anlage bzw. Steuervorrichtung zu "Parametrieren". Die Parametrierung betrifft in der Regel sowohl die Hardwareals auch die Softwarekonfiguration. Die Erfindung sieht nur vor, dass eine derartige Konfiguration nach Abschluss der Inbetriebnahme nicht mehr oder zumindest nicht mehr ohne weiteres verändert werden kann. Dadurch wird verhindert, dass an der Maschine, der Anlage oder Steuerung Manipulationen vorgenommen werden können, beispielsweise in einer von einem Betreiber der Maschine oder Anlage unbeabsichtigter Weise zusätzlich Hardware- und/oder Software-komponenten hinzugefügt werden können, mittels derer Daten aus der Maschine bzw. der Anlage und insbesondere deren Steuervorrichtung in unerlaubter Weise abgegriffen werden können. Damit der Betreiber der Maschine oder Anlage die Konfiguration in beabsichtigter und erlaubter Weise dennoch ändern kann, kann ein Schlüssel vorgesehen werden, der nur dem Betreiber bekannt ist und die Änderungsmöglichkeit der Konfiguration in der Steuervorrichtung wieder freigibt.

Um die Sicherheit im Umgang mit vertraulichen Daten zu erhöhen, können vorteilhaft mehrere der aufgezeigten Maßnahmen gleichzeitig angewendet werden.

Durch die Erfindung wird beispielsweise sichergestellt, dass während der Abarbeitung eines verschlüsselten Teileprogrammes unter Berücksichtigung zugehöriger Fertigungsinformation mittels einer CNC-Steuerung
- kein Fertigungs-Know-How transparent wird,
- keine Schnittstellen nach außen geöffnet sind,
- keine LOG-Files angelegt werden können,
- die Steuerung datentechnisch nicht "angezapft" werden kann,
- keine unzulässigen Hardware- oder Software-Änderungen an der Maschine, der Anlage oder der Steuerung vorgenommen werden.

Damit ist sichergestellt, dass z.B. das Teileprogramm nicht rekonstruiert werden kann und der Know-How Schutz ist gewährleistet.

Durch die Erfindung kann weiterhin sichergestellt werden, dass lediglich vom Benutzer erlaubte (freigegebene) Daten aus der Steuerung ausgelesen bzw. aufgezeichnet werden können.

Die Erfindung wird nachfolgend anhand von Ausführungsbeispielen näher erläutert. Es zeigen:
- FIG 1: ein Automatisierungssystem mit einer erfindungsgemäßen Steuervorrichtung,
- FIG 2: ein Ablaufdiagramm zum Betrieb einer erfindungsgemäßen Steuervorrichtung und
- FIG 3: eine Benutzeroberfläche einer erfindungsgemäßen Steuervorrichtung.

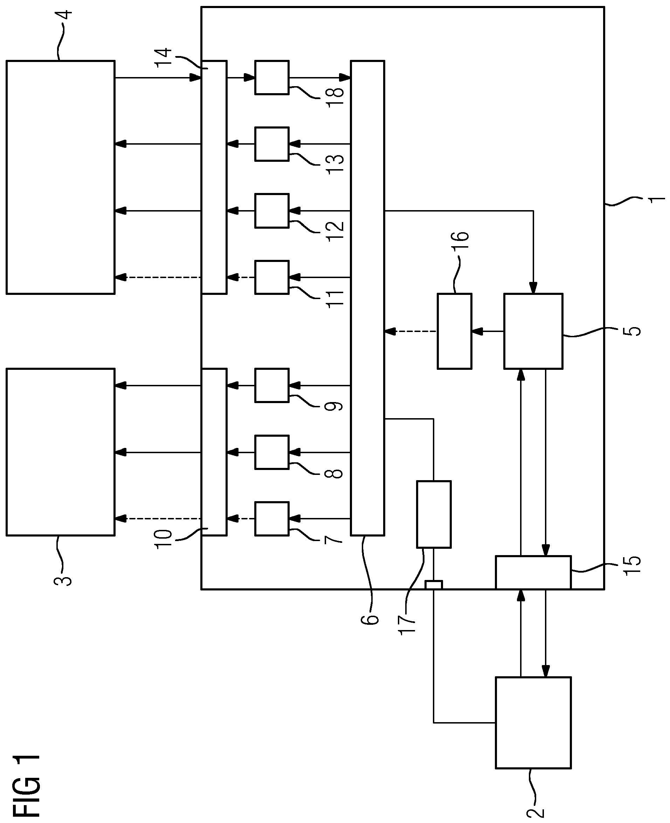

Figur 1 zeigt ein Fertigungssystem, das als wesentliche Komponenten eine als numerische Steuerung (CNC) 1 ausgebildete Steuervorrichtung, eine Werkzeugmaschine 2, eine Bedieneinrichtung (HMI = Human Machine Interface) 3 sowie einen externen Rechner 4 umfasst. In einem Prozessor (NCK = Numeric Control Kernel) 5 der Steuerung 1 wird ein in einem Speicher 6 hinterlegtes Teileprogramm abgearbeitet, wodurch Steuerbefehle für die Antriebe der Werkzeugmaschine 2 erzeugt werden. Aktuelle Positionswerte der von der Werkzeugmaschine 2 umfassten Achsen werden zur Bildung einer Regelungsschleife aus der Werkzeugmaschine 2 ausgelesen und der Steuerung 1, insbesondere dem Prozessor 5, zugeführt. Zur Verbindung der Werkzeugmaschine 2 mit der Steuerung 1 ist eine Schnittstelle 15 vorhanden. Weiterhin ist die Anzeigeeinrichtung 3 über eine Schnittstelle 10 und der externe Rechner 4 über eine Schnittstelle 14 mit der Steuerung 1 verbunden. Mittels der Bedieneinrichtung 3 werden einem Benutzer Daten aus der Steuerung 1 angezeigt. Diese Daten betreffen insbesondere einen aktuell bearbeiteten Fertigungsauftrag. Beispielsweise werden dem Benutzer mittels der Bedieneinrichtung 3 auf einem Display Positionswerte, Geschwindigkeiten, Beschleunigungen der Linear- oder Rundachsen der Werkzeugmaschine 2 angezeigt oder Daten bezüglich des aktuell abgearbeiteten Teileprogramms wie Satznummer, aktive Transformationen, Nullpunktverschiebungen, aktive Frames etc. Weiterhin ist die Anzeige von während der Bearbeitung anfallenden Daten wie Schnittkräfte, Drehmomente, Dynamikdaten etc. möglich. Anhand der Vielzahl der Daten kann sich der Fachmann ein sehr genaues Bild über den aktuell ablaufenden Fertigungsauftrag machen.

Die beispielhaft genannten und eine Vielzahl weiterer Daten können jedoch nicht nur von der Steuervorrichtung 1 zu einer in unmittelbarer Nähe zu der Steuervorrichtung 1 lokalisierten Bedieneinrichtung 3, sondern insbesondere über ein Netzwerk wie das Firmennetzwerk (Intranet) oder das Internet auch zu einem weit von der Steuerung 1 entfernten externen Rechner 4 übertragen werden. Derartige externe Rechner 4 werden beispielsweise in Fertigungsleitstellen zur Steuerung und Überwachung einer Vielzahl einzelner Maschinen oder für statistische Auswertungen eingesetzt.

Bei der erfindungsgemäßen Steuerung 1 soll verhindert werden, dass die Steuerung 1 oder die Werkzeugmaschine 2 betreffende Daten über die Bedieneinrichtung 3 oder den externen Rechner 4 an nicht autorisierte Personen gelangen können. Hierzu sieht die Steuerung 1 Datenauslese-Verhinderungseinrichtungen 7 bzw. 11 vor, die das Auslesen bestimmter Daten aus dem Speicher 6 unterbinden bzw. nur explizit freigegebene Daten übertragen. Eine vom Anwender nicht zugelassene Übertragung von Daten von der Steuerung 1 zu der Bedieneinrichtung 3 bzw. dem externen Rechner 4 und somit ein möglicher Datenmissbrauch werden damit effektiv verhindert.

Weiterhin umfasst die Steuerung 1 Datenverschlüsselungseinrichtungen 8 bzw. 12, mittels derer in dem Speicher 6 hinterlegte Daten zunächst verschlüsselt werden, bevor sie über die Schnittstellen 10 bzw. 14 an die Bedieneinrichtung 3 oder den externen Rechner 4 übertragen werden. Dadurch wird verhindert, dass die betreffenden Daten für beliebige Personen zugänglich sind. Nur wer im Besitz des entsprechenden Schlüssels ist, kann aus den übertragenen Daten die ursprünglich aus dem Speicher 6 ausgelesenen Daten wieder herstellen.

Eine weitere Möglichkeit zum Verhindern von Datenmissbrauch ist bei der Steuerung 1 dadurch gegeben, dass Dateninformationsgehalts-Reduzierungseinrichtungen 9 und 13 vorhanden sind. Mittels dieser Einrichtungen wird der Informationsgehalt von in dem Speicher 6 hinterlegten Daten so weit reduziert, dass ein Missbrauch weitgehend verhindert wird. Die Daten werden beispielsweise hinsichtlich ihrer Genauigkeit reduziert, so dass beispielsweise bestimmte Motordrehzahlen nur noch mit einer Genauigkeit von ± 100 U/min angezeigt werden.

Eine weitere Möglichkeit zur Reduzierung des Informationsgehalts besteht darin, dass die zeitliche Auflösung stark vermindert wird. Beispielsweise kann eine Drehzahl nur noch in Zeitabständen von mindestens 5 Sekunden aktualisiert werden.

Als weitere Maßnahme zum Verhindern von Datenmissbrauch ist bei der erfindungsgemäßen Steuerung 1 eine Datenaufzeichnungs-Verhinderungseinrichtung 16 vorgesehen. Dadurch wird insbesondere die Aufzeichnung so genannter Traces verhindert, die den Werteverlauf bestimmter Variabler, beispielsweise Achspositionen, über einen vorgegebenen Zeitraum hin aufzeichnen. Die Datenaufzeichnungs-Verhinderungseinrichtung 16 bewirkt, dass die Aufzeichnung bzw. Speicherung derartiger Daten in dem Speicher 6 unterbunden wird.

Darüber hinaus verfügt die Steuerung 1 über eine Konfigurations-Vergleichseinrichtung 17, die eine aktuelle Konfiguration der Werkzeugmaschine 2 oder der Steuerung 1 mit einer in dem Speicher 6 hinterlegten Referenzkonfiguration vergleicht. Mittels der Konfigurations-Vergleichseinrichtung kann festgestellt werden, ob die aktuelle Hardwarekonfiguration der Werkzeugmaschine 2 oder die aktuelle Softwarekonfiguration der Steuerung 1 mit entsprechenden Referenzkonfigurationen übereinstimmen. Ist dies nicht der Fall, so besteht zumindest die Möglichkeit einer unbeabsichtigten Manipulation der Werkzeugmaschine 2 oder der Steuerung 1. Vorteilhaft wird bei einer festgestellten Manipulation ein gewünschter Fertigungsauftrag nicht ausgeführt.

Eine zusätzliche Möglichkeit zum Verhindern von Datenmissbrauch besteht bei der erfindungsgemäßen Steuerung 1 gemäß Figur 1 darin, dass eine Konfigurationsüberwachungseinrichtung 18 verhindert, dass eine während der Inbetriebnahme der mittels der Steuerung 1 gesteuerten Maschine in dem Speicher 6 hinterlegte Hardware- und/oder Softwarekonfiguration geändert wird. Eine Änderung der Konfiguration ist nur möglich, wenn die Konfigurationsüberwachungseinrichtung 18 mittels eines nur dem Betreiber der Maschine 2 bekannten Schlüssels freigeschaltet wird. Dadurch wird verhindert, dass nach der Inbetriebnahme eine Manipulation der Hardware oder der Software der Maschine 2 oder der Steuerung 1 vorgenommen wird.

Die Einrichtungen 7 bis 9, 11 bis 13 sowie 17 bis 18 spiegeln in Figur 1 nur deren jeweilige Funktion wider und können sowohl in Hardware als auch in Software realisiert sein.

Die oben beispielhaft aufgezeigten Möglichkeiten werden im Rahmen der Erfindung dazu genutzt, einen unbeabsichtigten bzw. unberechtigten Abgriff von Daten bzw. Informationen bezüglich der Steuerung 1 bzw. der Maschine 2 zumindest weitgehend zu verhindern oder den Informationsgehalt der Daten soweit zu reduzieren, dass damit ein Missbrauch verhindert wird.

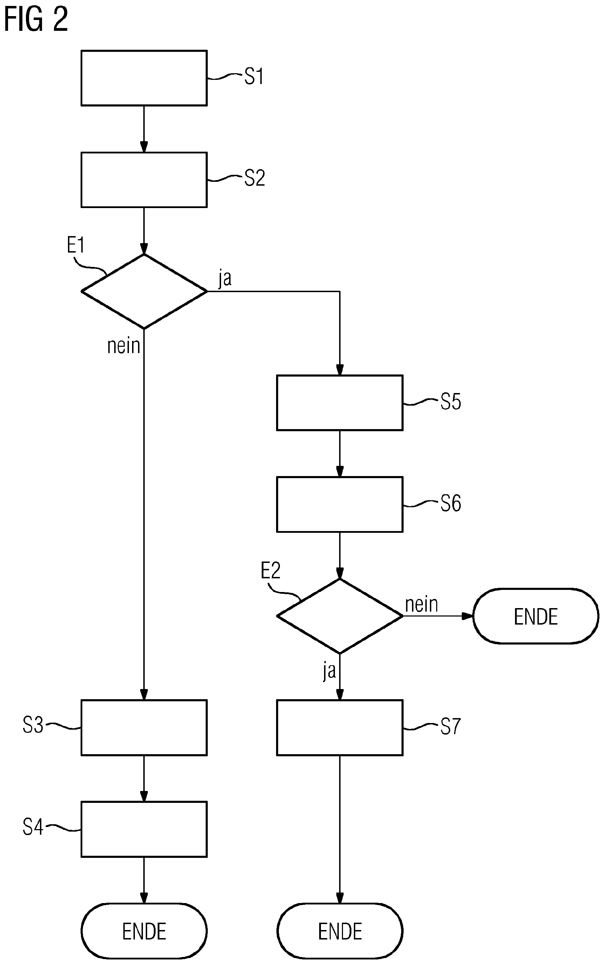

Die Erfindung wird weiterhin an dem Ablaufdiagramm gemäß Figur 2 veranschaulicht. In einem ersten Verfahrensschritt S1 wird ein Fertigungsauftrag konfiguriert, z.B. in Form eines Teileprogramms für eine bestimmte Werkzeugmaschine. In einem nachfolgenden Schritt S2 wird der Fertigungsauftrag in verschlüsselter Form auf eine Werkzeugmaschine bzw. deren Steuerung übertragen und dort in einem Speicher hinterlegt. In der Steuerung wird in einem entsprechenden Entscheidungsschritt E1 abgefragt, ob bei der Abarbeitung des Fertigungsauftrags ein gesicherter Betriebsmodus gewünscht wird. Ist dies nicht der Fall, so folgt in einem Schritt S3 die Abarbeitung des Fertigungsauftrags mittels der betreffenden Werkzeugmaschine in herkömmlicher Art und Weise sowie die Speicherung relevanter Fertigungsinformationen in einem Schritt S4. Wird hingegen in dem Entscheidungsschritt E1 festgestellt, dass ein sicherer Betriebsmodus gewünscht ist, so wird in einem Schritt S5 das Auslesen von Daten aus der Steuervorrichtung verhindert, das Auslesen von Daten lediglich in verschlüsselter Form ermöglicht, das Auslesen lediglich in Form vorverarbeiteter Daten mit reduziertem Informationsgehalt ermöglicht, die Anzeige von Daten auf einer Bedieneinrichtung verhindert, das Aufzeichnen von Daten verhindert oder die Änderung der Hardware- oder der Softwarekonfiguration der Maschine bzw. der Steuerung verhindert. Nachfolgend wird in einem Schritt S6 die Hardwarekonfiguration der Werkzeugmaschine 2 mit einer Referenz-Hardwarekonfiguration und die Softwarekonfiguration der Steuerung mit einer Referenz-Softwarekonfiguration verglichen. In einem Entscheidungsschritt E2 wird überprüft, ob die jeweiligen Konfigurationen übereinstimmen. Stimmen betreffende Konfigurationen nicht überein, so bedeutet dies das Ende der Abarbeitung des Fertigungsauftrags. Stimmen die Konfigurationen überein, so erfolgt in einem Schritt S7 die Abarbeitung des Fertigungsauftrags unter Berücksichtigung der in Schritt S5 festgelegten Maßnahmen. Anschließend wird der Fertigungsauftrag ohne Aufzeichnung bzw. Ausgabe von Fertigungsinformationen beendet.

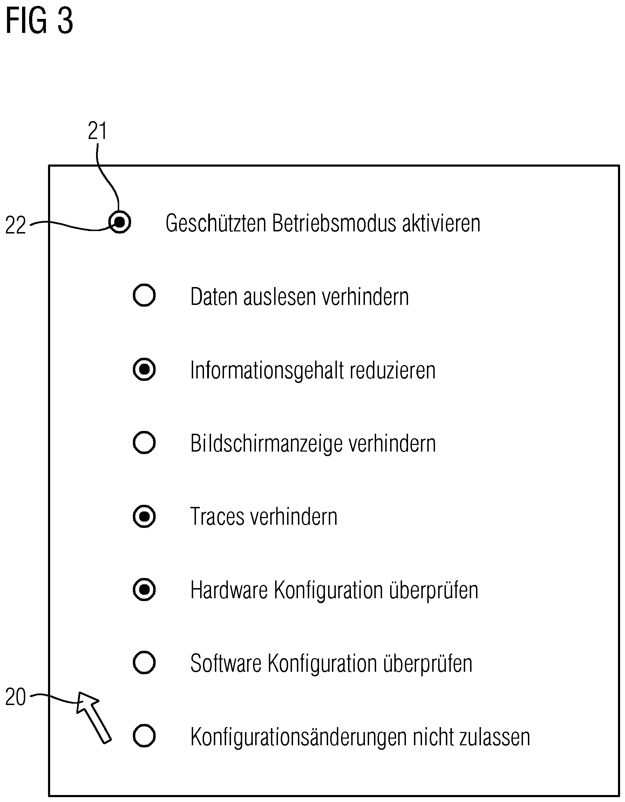

Figur 3 zeigt eine Benutzeroberfläche 19 einer erfindungsgemäßen Steuervorrichtung. Mittels einer in bekannter Weise anwendbaren und in der unteren linken Ecke gezeichneten Mauszeigers kann der Benutzer verschiedene Optionen aktivieren (jeweils gekennzeichnet durch einen schwarzen Punkt innerhalb eines Kreises) oder deaktivieren (jeweils gekennzeichnet durch einen leeren Kreis). Führt der Benutzer die Spitze des Mauszeigers 20 beispielsweise in den Auswahlkreis 21, so ändert sich bei jeder Betätigung der linken Maustaste (nicht dargestellt) der Status des Geschützten Betriebsmodus. Ein schwarzer Punkt 22 innerhalb des Kreises zeigt an, dass der geschützte Betriebsmodus aktuell aktiviert ist (siehe Zeichnung). Ein leerer Kreis 21 würde bedeuten, der geschützte Betriebsmodus ist nicht aktiv.

Gemäß dem Ausführungsbeispiel wurden die Optionen "Informationsgehalt reduzieren", "Traces verhindern" und "Hardwarekonfiguration überprüfen" ausgewählt. Dies ist ersichtlich an dem schwarzen Punkt innerhalb des betreffenden Kreises. Die Steuerung führt daher aktuell die sich jeweils hinter diesen Optionen verbergenden Maßnahmen durch. Die Optionen "Daten auslesen verhindern", "Bildschirmanzeige verhindern", Softwarekonfiguration überprüfen" und "Konfigurationsänderungen nicht zulassen" wurden nicht ausgewählten und sie werden daher von der Steuerung nicht ausgeführt.

Nur bei aktiviertem geschützten Betriebsmodus haben die darunter aufgezeigten Optionen Auswirkungen auf das Verhalten der Steuerung. Daher ist diese Option auf der Benutzeroberfläche 19 auch etwas nach links gegenüber den darunter angeordneten versetzt angeordnet und so schon optisch als "übergeordnete Option" gekennzeichnet. Für den Fall, dass die Option "Geschützten Betriebsmodus aktivieren" nicht gewählt wurde, sind vorzugsweise auch alle darunter angeordneten Optionen nicht anwählbar und auch entsprechend gekennzeichnet (leerer Kreis).

Bei einer bevorzugten Ausführungsform der Erfindung kann ferner mittels einer geeigneten Benutzeroberfläche (nicht dargestellt) von einem Benutzer der Steuervorrichtung eingestellt werden, für welche der in der Steuervorrichtung vorhandenen oder anfallenden Daten aus einer Gesamtheil aller in der Steuervorrichtung vorhandener oder anfallender Daten das Aufzeichnen der Daten und/oder das Auslesen der Daten aus der Steuervorrichtung unterbunden wird. Diese Ausführungsform bietet ein hohes Maß an Flexibilität in Bezug auf die Daten. So kann auf bestimmte, weniger vertrauliche Daten weiterhin uneingeschränkt zugegriffen werden, wohingegen vertrauliche Daten dem erfindungsgemäßen besonderen Schutz unterzogen sind.

## Patentansprüche

1. Verfahren zum Betrieb einer Steuervorrichtung (1) zum Steuern und/oder Regeln einer Maschine (2), einer Anlage oder eines Prozesses unter Abarbeitung eines Steuerprogramms,
- wobei in der Steuervorrichtung (1) Daten vorhanden sind und/oder Daten während der Abarbeitung des Steuerprogrammes in der Steuervorrichtung (1) anfallen,
- wobei die Steuervorrichtung (1) wenigstens eine Schnittstelle zum Auslesen der Daten und/oder zum Übertragen der Daten an eine externe Rechnereinheit (4) umfasst und/oder
- wobei die Steuervorrichtung (1) eine Anzeigeeinrichtung (3) umfasst und/oder mit einer Anzeigeeinrichtung (3) verbindbar ist zum Anzeigen der Daten,
**dadurch gekennzeichnet, dass**
bei der Steuervorrichtung (1) ein geschützter Betriebsmodus aktivierbar ist, in dem wenigstens einer der nachfolgend genannten Schritte durchgeführt wird:
- das Auslesen der Daten aus der Steuervorrichtung (1) wird verhindert,
- die Daten werden lediglich in verschlüsselter Form ausgelesen bzw. auf die externe Rechnereinheit (4) übertragen,
- die Daten werden lediglich in vorverarbeiteter Form mit reduziertem Informationsgehalt ausgelesen bzw. auf die externe Rechnereinheit (4) übertragen,
- die Anzeige der Daten auf der Anzeigeeinrichtung (3) wird verhindert,
- die Daten werden lediglich in vorverarbeiteter Form mit reduziertem Informationsgehalt auf der Anzeigeeinrichtung (3) angezeigt,
- das Aufzeichnen der Daten, die beim Steuern und/oder Regeln der Maschine (2), der Anlage oder des Prozesses anfallen, wird verhindert,
- eine Hardware- und/oder Software-Konfiguration der Maschine (2), der Anlage des Prozesses oder der Steuervorrichtung (1) wird mit einer Referenz- Hardware- und/oder Software-Konfiguration der Maschine (2), der Anlage des Prozesses oder der Steuervorrichtung (1) verglichen und in Abhängigkeit des Vergleichsergebnisses wird eine vorbestimmte Reaktion der Steuervorrichtung (1) erzeugt,
- das Ändern einer während einer Inbetriebnahme der Maschine oder Anlage festgelegten Hardware- und/oder Softwarekonfiguration wird verhindert.

2. Verfahren zum Betrieb einer Steuervorrichtung nach Anspruch 1, wobei die Maschine oder die Anlage bestimmte Hardware-Komponenten umfasst und das Einbindung neuer, bislang nicht umfasster Hardware-Komponenten verhindert wird.

3. Verfahren zum Betrieb einer Steuervorrichtung (1) nach Anspruch 1, wobei die Maschine oder die Anlage bestimmte Hardware-Komponenten umfasst und neue, bislang nicht umfasste Hardware-Komponenten nur dann in die Maschine oder die Anlage eingebunden werden können, wenn sie sich auf einer vorgegebenen Liste mit Hardware-Komponenten befinden.

4. Verfahren zum Betrieb einer Steuervorrichtung (1) nach einem der Ansprüche 1 bis 3, wobei eine Änderung des von der Steuervorrichtung (1) ausgeführten Steuerprogrammes verhindert wird.

5. Verfahren zum Betrieb einer Steuervorrichtung (1) nach einem der Ansprüche 1 bis 3, wobei von der Steuervorrichtung (1) nur vorgegebene und nicht durch einen Anwender modifizierbare Steuerprogramme ausgeführt werden.

6. Verfahren zum Betrieb einer Steuervorrichtung (1) nach einem der Ansprüche 1 bis 5, wobei einzelne Maßnahmen zum Verhindern des Auslesens der Daten aus der Steuervorrichtung (1) und/oder zum Übertragung der Daten an eine externe Rechnereinheit aktiviert, deaktiviert oder parametriert werden.

7. Verfahren zum Betrieb einer Steuervorrichtung nach Anspruch 6, wobei entsprechende Einstellungen durch einen autorisierten Benutzer an einer der Steuervorrichtung (1) zugeordneten Bedieneinrichtung, die eine Anzeigeeinrichtung (3) umfasst, wahlweise vorgenommen werden.

8. Verfahren zum Betrieb einer Steuervorrichtung (1) nach einem der Ansprüche 1 bis 7, wobei von einem Benutzer der Steuervorrichtung eingestellt wird, für welche der in der Steuervorrichtung vorhandenen oder anfallenden Daten aus einer Gesamtheil aller in der Steuervorrichtung vorhandener oder anfallender Daten das Aufzeichnen der Daten und/oder das Auslesen der Daten aus der Steuervorrichtung (1) unterbunden wird.

9. Steuervorrichtung (1) zum Steuern und/oder Regeln einer Maschine (2), einer Anlage oder eines Prozesses unter Abarbeitung eines Steuerprogramms und zur Durchführung eines Verfahrens nach einem der Ansprüche 1 bis 8,
- wobei in der Steuervorrichtung (1) Daten vorhanden sind und/oder Daten während der Abarbeitung des Steuerprogrammes in der Steuervorrichtung (1) anfallen,
- wobei die Steuervorrichtung (1) wenigstens eine Schnittstelle zum Auslesen der Daten und/oder zum Übertragen der Daten an eine externe Rechnereinheit (4) umfasst und/oder
- wobei die Steuervorrichtung (1) eine Anzeigeeinrichtung (3) umfasst und/oder mit einer Anzeigeeinrichtung (3) verbindbar ist zum Anzeigen der Daten,
**dadurch gekennzeichnet, dass** bei der Steuervorrichtung (1) ein geschützter Betriebsmodus aktivierbar ist, in dem das Aufzeichnen der Daten und/oder das Auslesen der Daten aus der Steuervorrichtung (1) unterbunden ist.

10. Steuervorrichtung (1) nach Anspruch 9, ausgebildet als CNC-Steuerung zur Steuerung und/oder Regelung einer Werkzeugmaschine oder eines Roboters.

11. Steuervorrichtung (1) nach Anspruch 9 oder 10, wobei von einem Benutzer der Steuervorrichtung einstellbar und/oder veränderbar ist, für welche der in der Steuervorrichtung vorhandenen oder anfallenden Daten aus einer Gesamtheil aller in der Steuervorrichtung vorhandener oder anfallender Daten das Aufzeichnen der Daten und/oder das Auslesen der Daten aus der Steuervorrichtung (1) unterbindbar ist.
